# EUROPÄISCHE PATENTSCHRIFT

(11) **EP 1 855 900 B1**
(45) Veröffentlichungstag und Bekanntmachung des Hinweises auf die Patenterteilung: **15.07.2009**
(21) Anmeldenummer: 06708254.5
(22) Anmeldetag: 14.02.2006
(51) Int. Cl.: B60J 3/02

(54) **HALTERUNG FÜR EINE KOMPONENTE UND MONTAGE DER HALTERUNG**
FIXTURE FOR A COMPONENT AND A FIXTURE MOUNT
FIXATION POUR UN COMPOSANT ET MONTAGE D'UNE FIXATION

(30) Priorität: 25.02.2005 DE 102005009277
(43) Veröffentlichungstag der Anmeldung: 21.11.2007
(73) Patentinhaber: Johnson Controls Interiors GmbH & Co. KG, 47929 Grefrath (DE)
(72) Erfinder: WELTER, Patrick, F-57730 Lachambre (FR)
(74) Vertreter: Wolff, Felix
(86) Internationale Anmeldenummer: PCT/EP2006/050917
(87) Internationale Veröffentlichungsnummer: WO 2006/089850

(56) Entgegenhaltungen:
- EP-A- 0 346 158
- US-A- 3 017 217
- US-A- 4 569 552
- US-A- 5 697 140
- US-A- 6 068 323
- US-A1- 2002 175 535

## Beschreibung

Die vorliegende Erfindung betrifft eine Halterung für eine Komponente, insbesondere für eine Sonnenblende eines Kraftfahrzeugs, sowie die Komponente. Weiterhin betrifft die vorliegende Erfindung die Montage der Halterung und die Montage der Komponente.

Aufgrund der Ausstattungsvielfalt in Fahrzeugen ist der Zeit- und Kostenaufwand zur Montage der Ausstattungskomponenten sehr hoch.

Da Schnapp-Befestigungen beim Einbau leicht beschädigt werden können, offenbart die Druckschrift DE 103 01 663 A1 oder US5697140 eine Vorrichtung zum Befestigen einer Sonnenblende mit einem Träger und einem Schwenkelement, dass um eine Schwenkachse schwenkbar im Träger angeordnet ist, und mit einem Arm, der in einer Bohrung des Schwenkelementes angeordnet ist. Eine seitliche Bewegung des Arms bewirkt, dass das Schwenkelement an flexiblen Schenkeln des Trägers in Eingriff gelangt, so dass der Träger an der Montagefläche befestigt ist. Die Schnapp-Befestigung ist ohne weitere Hilfsmittel montierbar. Jedoch weist der Träger eine rechtwinklige erste Öffnung auf, durch die hindurch das Schwenkelement sichtbar ist, damit die seitliche Bewegung zur Montage des Trägers durchführbar ist.

Aufgabe der Erfindung ist daher, eine Halterung für eine Komponente sowie eine Komponente zu schaffen, insbesondere für ein Fahrzeug, die sehr schnell, einfach und kostengünstig herstell- und montierbar ist und die optisch sehr ansprechend ausgebildet ist.

Die Aufgabe wird gelöst mit einer Halterung, insbesondere für eine Sonnenblende und insbesondere für ein Fahrzeug, umfassend ein Abdeckelement mit einem Rastmittel und einen Grundkörper, die entlang einem Achselement angeordnet sind, wobei das Achselement ein Positioniermittel zum Verstellen des Rastmittels von einer Montageposition in eine Einbauposition aufweist, wobei die Halterung in der Einbauposition mittels dem Rastmittel am Einbaukörper verrastet ist. Daher wird die Halterung in der Einbauposition sicher am Einbaukörper gehalten. Das Positioniermittel ermöglicht erfindungsgemäß den form- und/oder kraftschlüssigen Einbau der Halterung am Einbaukörper durch Verstellen des Achselementes relativ zum Abdeckelement oder des Abdeckelementes relativ zum Achselement. Das Abdeckelement und der Grundkörper sind in der Einbauposition des Rastmittels miteinander, mit dem Einbaukörper und mit dem Achselement form- und/oder kraftschlüssig in Eingriff, so dass das Achselement am Einbaukörper befestigt ist.

Das Positioniermittel ist im Bereich des Rastmittels, mit dem die Halterung am Einbaukörper verrastet wird, angeordnet. Es ist daher für einen Nutzer nicht sichtbar und beeinflusst den optischen Eindruck, beispielsweise einer Sonnenblende, daher nicht.

Das Abdeckelement und der Grundkörper wirken mit dem Einbaukörper und dem Achselement form- und/oder kraftschlüssig zusammen. Daher werden zum Befestigen des Achselementes am Einbaukörper keine weiteren Hilfsmittel oder Werkzeuge benötigt, insbesondere keine Schrauben, Nieten oder sonstige Bauteile, sondern die Montage der Halterung ist vollständig durch Anordnen und Verstellen dieser Bauelemente der Halterung relativ zueinander und dem Einbaukörper sehr einfach und schnell und daher kostengünstig möglich.

In einer bevorzugten Ausführungsform erstreckt sich der Einbaukörper im wesentlichen flächig und das Achselement ist im wesentlichen in Richtung einer Achse in einer Aussparung des Einbaukörpers angeordnet, besonders bevorzugt in einer Bohrung. Das Herstellen einer Bohrung ist kostengünstig möglich.

Bevorzugt bildet das Achselement eine Achse, um die es drehbar ist. Bei Anordnung einer Komponente am Achselement ist die Komponente daher um die Achse drehbar. Das Achselement dient als Werkzeug bei der Montage der Halterung.

Besonders bevorzugt ist das Rastmittel durch Drehen des Achselementes um die Achse verstellbar. Beim Einbau der Halterung, insbesondere für eine Sonnenblende mit einem L- förmigen Achselement, kann der Hebelarm des Achselementes genutzt werden, wodurch die Montage, insbesondere das Verstellen des Rastmittels von der Montageposition in die Einbauposition, für den Monteur sehr leicht ist.

In einer bevorzugten Ausführungsform weist der Grundkörper einen Vorsprung auf, der einen Spalt bildet, in dem der Einbaukörper in der Einbauposition zumindest teilweise angeordnet ist. Durch die Anordnung zumindest eines Teils des Einbaukörpers in dem Spalt ist die relative Lage der Halterung zum Einbaukörper festgelegt.

Der Grundköper weist ein Haltemittel auf, das zumindest teilweise in einer Aufnahme des Abdeckelementes angeordnet ist. Dadurch sind der Grundkörper und das Abdeckelement gegen Verdrehen relativ zueinander gesichert.

Weiterhin weist Abdeckelement eine Ausnehmung auf, die in der Einbauposition form- und/oder kraftschlüssig mit einer Anformung des Grundkörpers zusammenwirkt. Die Anformung ist bevorzugt hakenförmig und sichert das Rastmittel in der Einbauposition.

Vorzugsweise weist das Achselement eine Haltefläche auf, mit der es form- und/oder kraftschlüssig mit einer Anlagefläche des Abdeckelementes zusammenwirkt, so dass das Abdeckelement mittels der Haltefläche in Richtung der Achse in einer relativen Position zum Achselement gehalten wird.

Bevorzugt weist das Achselement ein Anschlagmittel auf, mit dem es mit dem Grundkörper zusammenwirkt. Das Anschlagmittel verhindert, dass das Achselement in Richtung der Achse zu weit in den Grundkörper geschoben wird.

Ebenfalls bevorzugt weist das Anschlagmittel zum Zusammenwirken mit einer Gegenanschlagfläche des Abdeckelementes eine Anschlagfläche auf, die während der Montage des Abdeckelementes am Achselement das Drehen des Achselementes bzw. des Abdeckelementes um die Achse in eine der beiden entgegengesetzten Drehrichtungen verhindert.

Bevorzugt sind das Abdeckelement, der Grundkörper und das Achselement aus einem Kunststoff gefertigt, besonders bevorzugt jeweils einstückig, so dass ihre Herstellung kostengünstig ist. Ebenfalls bevorzugt ist das Achselement mittels einem Einsatz aus Metall, beispielsweise einem Stahleinsatz, verstärkt und/oder umfasst ein Rohr zur Führung der elektrischen Verkabelung der Sonnenblende.

Ein weiterer Gegenstand der vorliegenden Erfindung ist ein Verfahren zur Montage einer Halterung in einem Fahrzeug, das die Schritte
- Aufschieben eines Abdeckelementes in Richtung der Achse auf ein Achselement,
- Drehen des Abdeckelementes in eine Drehrichtung bzw. des Achselementes in die Gegendrehrichtung,
- Aufschieben des Grundkörpers in Drehrichtung der Achse auf das Achselement,
- Anordnen der Halterung in einer Aussparung des Einbaukörpers,
- Drehen des Achselementes in die Drehrichtung,
- Drehen des Achselementes in die Gegendrehrichtung, und
in dieser Reihenfolge umfasst. Das Verfahren beinhaltet erfindungsgemäß nur das Anordnen und sowohl translatorisches als auch rotatorisches Verstellen der Bauteile der Halterung und des Einbaukörpers relativ zueinander. Der Einbau ist ohne weitere Hilfsmittel und Werkzeuge möglich. Dem Monteur stehen bei der Montage daher beide Hände zur Verfügung, so dass die Montage einfach, schnell und kostengünstig möglich ist.

Ein weiterer Gegenstand der vorliegenden Erfindung ist ein Verfahren zur Montage einer Komponente in einem Fahrzeug, das die Schritte
- Anordnen der Komponente an einem Achselement eine erfindungsgemäßen Halterung, und
- Montage der Halterung gemäß dem erfindungsgemäßen Verfahren
umfasst, wobei die Reihenfolge der Schritte vertauscht sein kann. In Abhängigkeit von den Montagemöglichkeiten der Halterung bzw. der Komponente, insbesondere der Platzverhältnisse während der Montage, kann die Komponente mit der Halterung entweder vormontiert, was aus Sicherheitsgründen und aus Kostengründen bevorzugt ist, und dann endgültig in der Aussparung des Einbaukörpers montiert werden. Oder die Halterung wird zuerst montiert und anschließend wird die Komponente am Achselement angeordnet. Das Verfahren ist daher flexibel an die Platzverhältnisse während der Montage anpassbar.

Ein weiterer Gegenstand der vorliegenden Erfindung ist ein Komponente, die eine erfindungsgemäße Halterung umfasst, mittels der sie in einem Fahrzeug, insbesondere in einem Kraftfahrzeug, angeordnet ist. Die Komponente kann sehr schnell, einfach und werkzeuglos montiert werden. Eine solche Komponente ist bevorzugt eine Sonnenblende, ein Spiegel, beispielsweise ein Rückspiegel, ein Haltegriff, der beispielsweise oberhalb der Tür oder in einer Tür eines Fahrzeugs angeordnet ist, oder ein Haken, beispielsweise zum Aufhängen von Kleidungsstücken.

Im Folgenden wird die Erfindung durch **Figuren** beschrieben. Die **Figuren** sind lediglich beispielhaft und schränken den allgemeinen Erfindungsgedanken nicht ein.
- **Figur 1**: zeigt eine erfindungsgemäße Komponente, die mittels einer erfindungsgemäßen Halterung an einem Einbaukörper angeordnet ist.
- **Figur 2**: zeigt eine erfindungsgemäße Halterung in einer Explosionsdarstellung.
- **Figur 3**: zeigt die im Einbaukörper angeordnete Komponente der **Figur 1****.**
- **Figuren 4 - 8**: zeigen den Einbau einer erfindungsgemäßen Komponente in einen Einbaukörper.
- **Figur 9**: zeigt das Abdeckelement der Halterung in einer weiteren perspektivischen Ansicht.
- **Figur 10**: zeigt den Schnitt A - A der **Figur 1** durch die erfindungsgemäße Halterung.
- **Figur 11**: zeigt den Grundkörper in einer weiteren perspektivischen Ansicht.

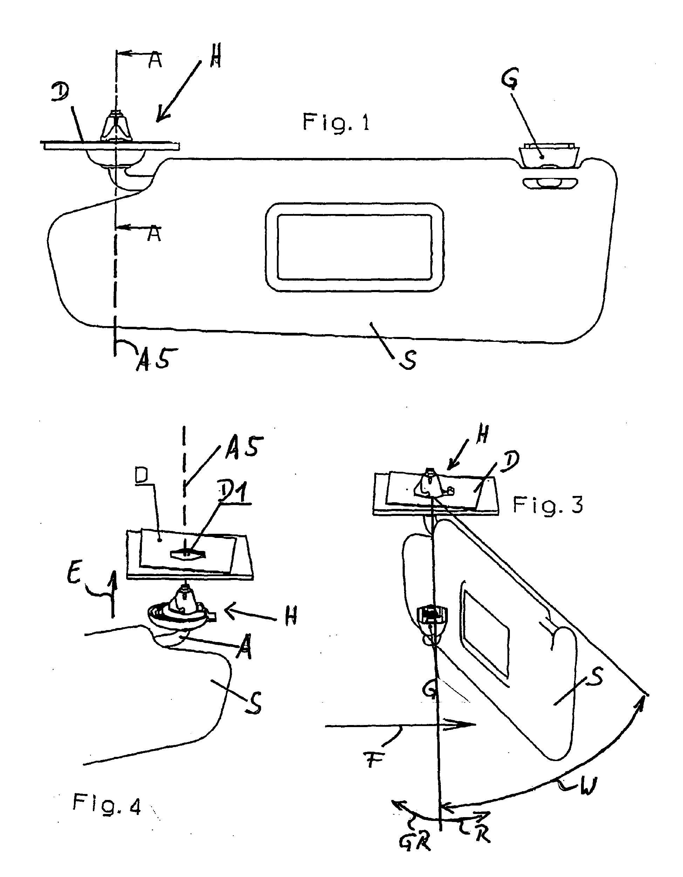

**Figur 1** zeigt eine erfindungsgemäße Komponente, die mittels einer erfindungsgemäßen Halterung H an einem Einbaukörper D angeordnet ist. Die Komponente ist eine Sonnenblende S und mittels der Halterung H am Dachhimmel eines Fahrzeugs, der den Einbaukörper D bildet, angeordnet. Im Folgenden werden die Begriffe Dachhimmel und Einbaukörper D sowie Komponente und Sonnenblende S synonym verwendet. Die Sonnenblende S ist drehbar um eine Achse A5 der Halterung H angeordnet und einerseits mittels der Halterung H und andererseits lösbar an einem Gegenlager G am Dachhimmel D gelagert. Nach dem Lösen der Sonnenblende S vom Gegenlager G ist sie um die Achse A5 der Halterung H drehbar.

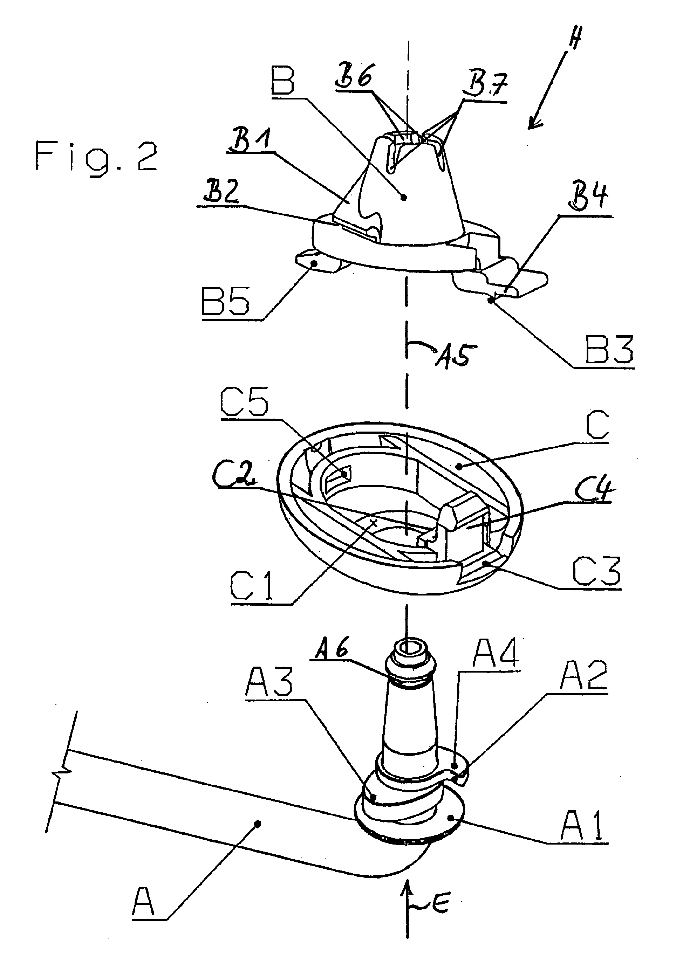

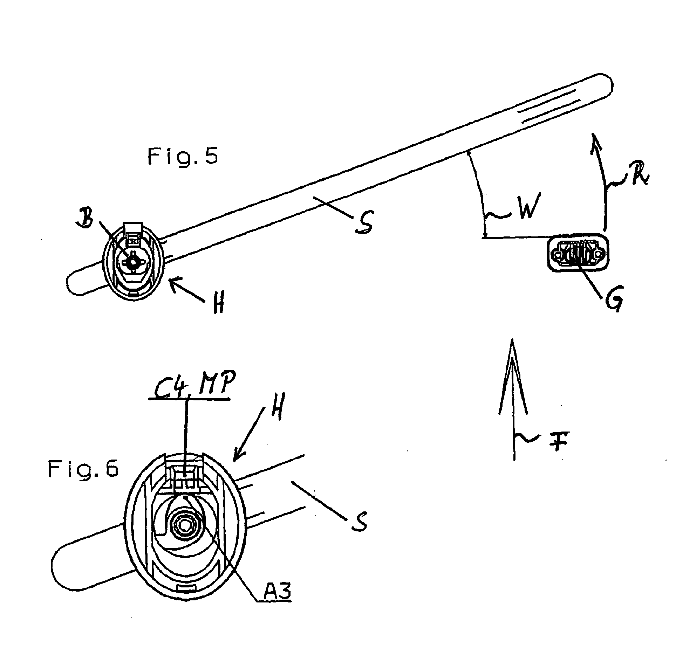

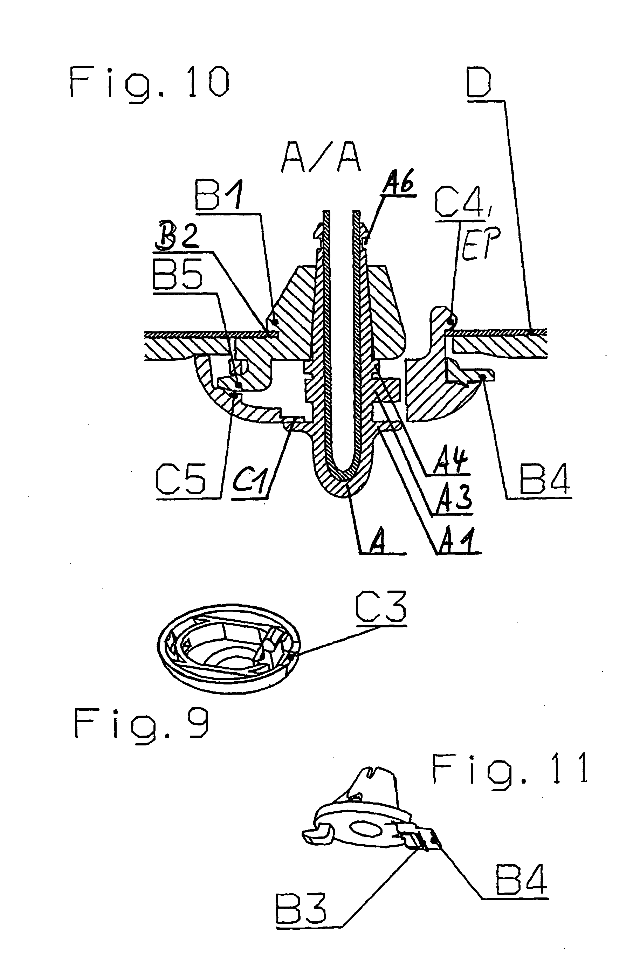

**Figur 2** zeigt eine erfindungsgemäße Halterung H in einer Explosionsdarstellung. Die **Figur 2** zeigt den Grundkörper B, das Abdeckelement C und das Achselement A in der Reihenfolge, in der sie entlang der Achse A5 am Achselement A angeordnet sind. Der Grundkörper B weist einen Vorsprung B1 auf, der einen Spalt B2 bildet, in dem der Einbaukörper D im eingebauten Zustand zumindest teilweise angeordnet ist. Der Einbaukörper D ist in der **Figur 2** nicht gezeigt. Das Abdeckelement C weist eine Aufnahme C5 auf, in der im eingebauten Zustand ein Haltemittel B5 des Grundkörpers B angeordnet ist. Weiterhin weist das Abdeckelement C ein Ausnehmung C3 auf, die mit einer Anformung B3 des Grundkörpers B zusammenwirkt, die an einer Rastfläche B4 des Grundkörpers B angeordnet ist und ein Rastmittel C4 des Abdeckelementes C in einer Einbauposition EP hält, s. **Figur 10****.** Das Achselement A weist eine Haltefläche A1 auf, die im eingebauten Zustand an einer Anlagefläche C1 des Abdeckelementes C anliegt. Außerdem weist das Achselement A ein Anschlagmittel A4 mit einer Anschlagfläche A2 auf, die während der Montage der Halterung zumindest zeitweise mit einer Gegenanschlagfläche C2 des Rastmittels C4 zusammenwirkt. Weiterhin weist das Achselement A ein Positioniermittel A3 auf, mittels dem während der Montage das Rastmittel C4 von einer Montageposition MP, s. **Figur 6****,** in die Einbauposition EP verstellt wird.

Der Grundkörper B weist in einem Bereich, in dem er form- und/oder kraftschlüssig mit dem Achselement A zusammenwirkt, Einbuchtungen B7 auf, so dass er sich beim Aufschieben auf das Achselement A flexibel an den Durchmesser des Achselementes A anpassen kann. In diesem Bereich ist das Achselement A im wesentlichen konisch geformt. Nach dem Aufschieben des Grundkörpers B auf das Achselement A greift der Grundkörper B mit Eingreifmitteln B6 in Kerben A6 des Achselementes A, so dass der Grundkörper B am Achselement A fixiert ist.

**Figur 3** zeigt die im Einbaukörper angeordnete Sonnenblende S der **Figur 1****.** Die Sonnenblende S ist aus dem Gegenlager G gelöst und das Achselement A der Halterung H um einen Winkel W gedreht, so dass die Sonnenblende S gedreht ist. Die Fahrtrichtung ist mittels einem Pfeil F angedeutet.

Die **Figuren 4 - 8** zeigen den Einbau einer erfindungsgemäßen Komponente S mit einer erfindungsgemäßen Halterung H in einen Einbaukörper D. Die **Figuren** zeigen als erfindungsgemäße Komponente eine Sonnenblende S. Der Einbaukörper ist der Dachhimmel D eines Kraftfahrzeugs. Der Einbaukörper D ist in den **Figuren 5 - 8** nicht gezeigt.

**Figur 4** zeigt die Montage der Sonnenblende mit bereits zusammengebauter erfindungsgemäßer Halterung H im Dachhimmel D, beispielsweise eines Kraftfahrzeugs. Die Halterung H wird in einer Einbaurichtung, die mittels einem Pfeil E angedeutet ist, in einer Aussparung D1 des Einbaukörpers D in Richtung der Achse A5 des Achselementes A angeordnet.

Die **Figuren 5 - 8** zeigen die Montage der Halterung H.

**Figur 5** zeigt die Halterung H mit dem Grundkörper B, während der Grundkörper B in den **Figuren 6 - 8** zur Verdeutlichung weggelassen ist. Die Sonnenblende S wird aus dem Gegenlager G gelöst und um einen Winkel W in eine Drehrichtung R verdreht, der bevorzugt ca. 15 - 25°, besonders bevorzugt ca. 20° beträgt, in die Aussparung D1 des Einbaukörpers D eingebaut. Die Fahrtrichtung ist wieder mittels einem Pfeil F angedeutet.

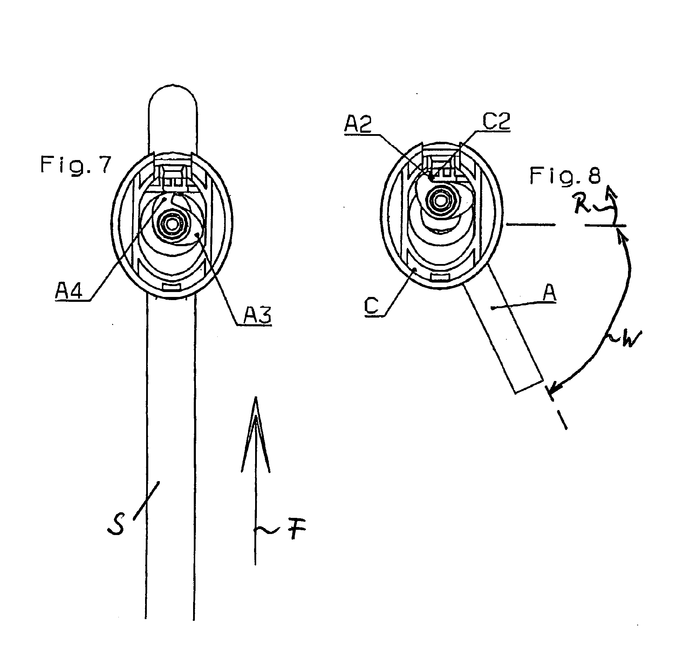

Zuerst wird das Abdeckelement C in Richtung der Achse A5 auf das Achselement A geschoben, bis die Anlagefläche C1 des Abdeckelementes C an der Haltefläche A1 des Achselementes A anliegt. Dann wird das Achselement A in Drehrichtung R, hier die Gegenuhrzeigerrichtung, bzw. das Abdeckelement C in die Gegendrehrichtung GR, hier die Uhrzeigerrichtung, gedreht, bis die Anschlagfläche A2 des Achselementes A mit der Gegenanschlagfläche C2 des Abdeckelementes C zusammenwirkt, s. **Figur 8****.** Im Folgenden werden die Begriffe Drehrichtung R und Gegenuhrzeigerrichtung sowie Gegendrehrichtung GR und Uhrzeigerrichtung synonym verwendet. In dieser Position ist das Abdeckelement C nicht in die Gegenuhrzeigerrichtung R bzw. das Achselement A nicht in die Uhrzeigerrichtung GR drehbar. Dann wird der Grundkörper B in Richtung der Achse A5 auf das Achselement A aufgeschoben, wobei das Haltemittel B5 des Grundkörpers B in einer Aufnahme C5 des Abdeckelementes C angeordnet wird. Anschließend wird die Halterung H in einer Aussparung D1 des Einbaukörpers D angeordnet, so dass der Einbaukörper D zumindest teilweise in einem Spalt B2 des Grundkörpers B angeordnet ist und das Rastmittel C4 des Abdeckelementes C form- und/oder kraftschlüssig mit dem Einbaukörper D zusammenwirkt.

Dazu wird, bei vormontierter Halterung H, ausgehend von der **Figur 8****,** in der die Sonnenblende S um einen Winkel W von bevorzugt 55 - 75°, besonders bevorzugt ca. 65° in die Gegendrehrichtung GR gedreht ist, die Sonnenblende S unterhalb der Aussparung D1 des Dachhimmels D angeordnet, so dass der Querschnitt des Grundkörpers B im wesentlichen der Kontur der Aussparung D1 entspricht bzw. so dass der Grundkörper B durch die Aussparung D1 geführt werden kann, bis das Abdeckelement C zumindest teilweise am Dachhimmel D anliegt. Die Sonnenblende S wird dann über das Gegenlager G hinweg in Drehrichtung R gedreht, bis das Rastmittel mittels dem Positioniermittel von seiner Montageposition in die Einbauposition verstellt ist. Für den Monteur ist das Verstellen des Rastmittels C4 durch ein Verschieben des Schwerpunktes der Halterung H zumindest spürbar und gegebenenfalls hörbar. In der Einbauposition EP verrastet die Anformung B3 des Grundkörpers B in der Ausnehmung C3 des Abdeckelementes C, so dass das Rastmittel C4 nicht mehr in die Montageposition MP zurückgestellt werden kann. Anschließend kann die Sonnenblende S in die Gegendrehrichtung GR zurückgestellt und am Gegenlager G angeordnet werden.

Um die Halterung H bzw. die Sonnenblende S aus der Aussparung D1 des Dachhimmels D zu lösen und zu entfernen, wird die Sonnenblende S um einen Winkel W von ca. 40 - 50°, bevorzugt ca. 45°, in die Gegendrehrichtung GR gedreht. Anschließend wird die Rastfläche B4 angehoben, so dass die Anformung B3 nicht mehr in die Ausnehmung C3 greift. Danach lässt sich das Abdeckelement C entlang dem Dachhimmel D verschieben und die Halterung H aus der Aussparung D1 nehmen.

**Figur 7** zeigt die Sonnenblende S nach dem Lösen aus dem Gegenlager G und Drehen in Gegendrehrichtung GR, so dass sie im wesentlichen parallel der Fahrtrichtung F angeordnet ist. Diese Position nimmt eine Sonnenblende S eines Kraftfahrzeuges insbesondere bei Auslösen eines seitlich im Bereich des Dachhimmels D oder der A-Säule angeordneten Airbags ein. In dieser Position bildet das Anschlagmittel A4 des Achselementes A einen Anschlag, so dass sich die Anformung B3 nicht aus der Ausnehmung C3 lösen kann und die Verrastung der Halterung H zusätzlich gesichert ist.

**Figur 9** zeigt das Abdeckelement C der Halterung H in einer weiteren perspektivischen Ansicht. Sichtbar ist insbesondere die Ausnehmung C3 des Abdeckmittels C.

**Figur 10** zeigt den Schnitt A - A der **Figur 1** durch die erfindungsgemäße Halterung H im eingebauten Zustand bzw. in der Einbauposition EP des Rastmittels C4 in der Aussparung D1 des Einbaukörpers D. Sichtbar sind das Achselement A mit der Haltefläche A1, dem Anschlagmittel A4, dem Positioniermittel A3 und der Kerbe A6, das Abdeckelement C mit der Anlagefläche C1, der Aufnahme C5 und dem Rastmittel C4 in der Einbauposition EP, der Grundkörper B mit dem Vorsprung B1, dem Spalt B2, der Rastfläche B4 und dem Haltemittel B5, das zumindest teilweise in der Aufnahme C5 angeordnet ist, und der Einbaukörper D, der zumindest teilweise in dem Spalt B2 angeordnet ist.

**Figur 11** zeigt den Grundkörper B der Halterung H in einer weiteren perspektivischen Ansicht. Sichtbar ist insbesondere die Anformung B3 an der Rastfläche B4 des Grundkörpers B.

### Bezugszeichenliste:

- A: Achselement
- A1: Haltefläche
- A2: Anschlagfläche
- A3: Positioniermittel
- A4: Anschlagmittel
- A5: Achse
- A6: Kerbe
- B: Grundkörper
- B1: Vorsprung
- B2: Spalt
- B3: Anformung
- B4: Rastfläche
- B5: Haltemittel
- B6: Eingreifmittel
- B7: Einbuchtung
- C: Abdeckelement
- C1: Anlagefläche
- C2: Gegenanschlagfläche
- C3: Ausnehmung
- C4: Rastmittel
- C5: Aufnahme
- D: Einbaukörper, Dachhimmel
- D1: Aussparung des Einbaukörpers
- G: Gegenlager
- H: Halterung
- S: Komponente, Sonnenblende
- F: Fahrtrichtung
- E: Einbaurichtung
- R: Drehrichtung
- GR: Gegendrehrichtung
- MP: Montageposition des Rastmittels
- EP: Einbauposition des Rastmittels

## Patentansprüche

1. Halterung (H) für eine Sonnenblende (S) und insbesondere für ein Fahrzeug, umfassend ein Abdeckelement (C) mit einem Rastmittel (C4) und einen Grundkörper (B), die entlang einem Achselement (A) angeordnet sind, wobei das Achselement (A) ein Positioniermittel (A3) zum Verstellen des Rastmittels (C4) von einer Montageposition (MP) in eine Einbauposition (EP) aufweist, wobei die Hatterung (H) in der Einbauposition (EP) mittels dem Rastmittel (C4) am Dachhimmel (D) verrastet ist, **dadurch gekennzeichnet, dass** der Grundkörpe (B) ein Haltemittel (B5) aufweist, das zumindest teilweise in einer Aufnahme (C5) des Abdeckelermentes (C) angeordnet ist, wobei das Abdeckelement (C) eine Ausnehmung (C3) aufweist, die in der Einbauposition (EP) form- oder kraftschlüssig mit einer Anformung (B3) des Grundkörpers (B) zusammenwirkt und das Achselement (A) eine Haltefläche (A1) aufweist, mit der es in der Einbauposition (EP) form- oder kraftschlüssig mit einer Anlagefläche (C1) des Abdeckelementes (C) zusammenwirkt.

2. Halterung H nach Anspruch 1, **dadurch gekennzeichnet, dass** der Dachhimmel (D) sich im wesentlichen flächig erstreckt und das Achselement (A) im wesentlichen in Richtung einer Achse (A5) in einer Aussparung (D1) des Dachhimmels (D) angeordnet ist.

3. Halterung H nach einem der vorherigen Ansprüche, **dadurch gekennzeichnet, dass** das Achselement (A) um die Achse (A5) drehbar ist.

4. Halterun (H) nach einem der vorherigen Ansprüche, **dadurch gekennzeichnet, dass** das Rastmittel (C4) durch Drehen des Achselementes (A) um die Achse (A5) verstellbar ist.

5. Halterung (H) nach einem der vorherigen Ansprüche, **dadurch gekennzeichnet, dass** der Grundkörper (B) einen Vorsprung (B1) aufweist, der einen Spalt (B2) bildet, in dem der Dachhimmel (D) in der Einbauposition EP zumindest teilweise angeordnet ist.

6. Halterung (H) nach einem der vorherigen Ansprüche, **dadurch gekennzeichnet, dass** das Achselement (A) ein Anschlagmittel (A4) aufweist, mit dem es in der Einbauposition (EP) form- oder kraftschlüssig mit dem Grundkörper (B) zusammenwirkt.

7. Halterung (H) nach einem der vorherigen Ansprüche, **dadurch gekennzeichnet, dass** das Anschfagmittel (A4) zum Zusammenwirken mit einer Gegenanschlagfläche (C2) des Abdeckelementes (C) eine Anschlagfläche (A2) aufweist

8. Verfahren zur Montage einer Halterung (H) in einem Fahrzeug, **dadurch gekennzeichnet, dass** es die Schritte
- Aufschieben eines Abdeckelementes (C) in Richtung der Achse (A5) auf ein Achselement (A).
- Drehen des Achselementes (A) in eine Richtung (R) bzw. des Abdeckelementes (C) in die Gegendrehrichtung (GR),
- Aufschieben des Grundkörpers B in Richtung der Achse (A5) auf das Achselement (A)
- Anordnen der Halterung (H) in einer Aussparung (D1) des Dachhimmels (D),
- Drehen des Achselementes (A) in die Drehhchtung (R), und
- Drehen des Achselementes (A) in die Gegendrehrichtung (GR),
in dieser Reihenfolge umfasst.

9. Verfahren zur Montage einer Komponente in einem Fahrzeug, **dadurch gekennzeichnet, dass** es die Schritte
- Anordnen der Komponente an einem Achselement (A) einer Halterung (H) nach einem der Ansprüche 1 - 7, und
- Montage der Halterung (H) gemäß dem Verfahren nach Anspruch 8
umfasst, wobei die Reihenfolge der Schritte vertauscht sein kann.

10. Komponente, **dadurch gekennzeichnet, dass** sie eine Halterung nach einem der Ansprüche 1 - 7 umfasst, mittels der sie in einem Fahrzeug angeordnet ist.

## Claims

1. Fixture (H) for a sun visor (S) and in particular for a vehicle, comprising a covering element (C) with a latching means (C4), and a basic body (B), which are arranged along a spindle element (A), the spindle element (A) having a positioning means (A3) for adjusting the latching means (C4) from a mounting position (MP) into a fitted position (EP), with the fixture (H) being latched to the roof lining (D) in the fitted position (EP) by means of the latching means (C4), **characterized in that** the basic body (B) has a holding means (B5) which is at least partially arranged in a receptacle (C5) of the covering element (C), the covering element (C) having a recess (C3) which, in the fitted position (EP), interacts in an interlocking or frictional manner with an integral formation (B3) on the basic body (B), and the spindle element (A) having a holding surface (A1) with which it interacts, in the fitted position (EP), in an interlocking or frictional manner with a bearing surface (C1) of the coupling element (C) .

2. Fixture H according to Claim 1, **characterized in that** the roof lining (D) extends in an essentially planar manner and the spindle element (A) is arranged in a cutout (D1) of the roof lining (D) essentially in the direction of an axis (A5).

3. Fixture H according to one of the preceding claims, **characterized in that** the spindle element (A) is rotatable about the axis (A5).

4. Fixture (H) according to one of the preceding claims, **characterized in that** the latching means (C4) is adjustable by rotation of the spindle element (A) about the axis (A5).

5. Fixture (H) according to one of the preceding claims, **characterized in that** the basic body (B) has a projection (B1) which forms a gap (B2) in which the roof lining D is at least partially arranged in the fitted position (EP).

6. Fixture (H) according to one of the preceding claims, **characterized in that** the spindle element (A) has a stop means (A4) with which it interacts, in the fitted position (EP), in an interlocking or frictional manner with the basic body (B).

7. Fixture (H) according to one of the preceding claims, **characterized in that** the stop means (A4) has a stop surface (A2) for interaction with a mating stop surface (C2) of the covering element (C).

8. Method for mounting a fixture (H) in a vehicle, **characterized in that** it comprises the steps of
- pushing a covering element (C) in the direction of the axis (A5) onto a spindle element (A),
- rotating the spindle element (A) in one direction (R) and rotating the covering element (C) in the opposite direction of rotation (GR),
- pushing the basic body (B) in the direction of the axis (A5) onto the spindle element (A),
- arranging the fixture (H) in a cutout (D1) of the roof lining (D),
- rotating the spindle element (A) in the direction of rotation (R), and
- rotating the spindle element (A) in the opposite direction of rotation (GR),
in this sequence.

9. Method for mounting a component in a vehicle, **characterized in that** it comprises the steps of
- arranging the component on a spindle element (A) of a fixture (H) according to one of Claims 1-7, and
- mounting the fixture (H) in accordance with the method according to Claim 8,
with it being possible for the step sequence to be swapped.

10. Component, **characterized in that** it comprises a fixture according to one of Claims 1-7, by means of which it is arranged in a vehicle.

## Revendications

1. Fixation (H) pour un pare-soleil (S) et en particulier pour un véhicule, comprenant un élément de recouvrement (C) avec un moyen d'encliquetage (C4) et un corps de base (B), qui sont disposés le long d'un élément d'axe (A), dans laquelle l'élément d'axe (A) comporte un moyen de positionnement (A3) pour le déplacement du moyen d'encliquetage (C4) d'une position de montage (MP) dans une position d'accrochage (EP), dans laquelle la fixation (H) est verrouillée dans la position d'accrochage (EP) sur le ciel de toit (D) au moyen du moyen d'encliquetage (C4), **caractérisée en ce que** le corps de base (B) comprend un moyen de maintien (B5), qui est disposé au moins en partie dans un logement (C5) de l'élément de recouvrement (C), dans laquelle l'élément de recouvrement (C) présente un évidement (C3) qui, dans la position d'accrochage (EP), coopère en complémentarité de forme ou de force avec un ergot (B3) du corps de base (B) et l'élément d'axe (A) présente une surface de maintien (A1), avec laquelle, dans la position d'accrochage (EP), il coopère en complémentarité de forme ou de force avec une surface d'appui (C1) de l'élément de recouvrement (C).

2. Fixation (H) selon la revendication 1, **caractérisée en ce que** le ciel de toit (D) s'étend essentiellement à plat et **en ce que** l'élément d'axe (A) est disposé essentiellement dans la direction d'un axe (A5) dans une découpe (D1) du ciel de toit (D).

3. Fixation (H) selon l'une quelconque des revendications précédentes, **caractérisée en ce que** l'élément d'axe (A) peut tourner autour de l'axe (A5).

4. Fixation (H) selon l'une quelconque des revendications précédentes, **caractérisée en ce que** le moyen d'encliquetage (C4) peut être déplacé par rotation de l'élément d'axe (A) autour de l'axe (A5).

5. Fixation (H) selon l'une quelconque des revendications précédentes, **caractérisée en ce que** le corps de base (B) présente une saillie (B1), qui forme une fente (B2) dans laquelle le ciel de toit (D) est disposé au moins en partie, dans la position d'accrochage (EP).

6. Fixation (H) selon l'une quelconque des revendications précédentes, **caractérisée en ce que** l'élément d'axe (A) comprend un moyen de butée (A4), avec lequel il coopère en complémentarité de forme ou de force avec le corps de base (B), dans la position d'accrochage (EP).

7. Fixation (H) selon l'une quelconque des revendications précédentes, **caractérisée en ce que** le moyen de butée (A4) présente une face de butée (A2) destinée à coopérer avec une face de butée opposée (C2) de l'élément de recouvrement (C).

8. Procédé de montage d'une fixation (H) dans un véhicule, **caractérisé en ce qu'**il comporte les étapes suivantes dans cet ordre:
- chausser un élément de recouvrement (C) dans la direction de l'axe (A5) sur un élément d'axe (A);
- faire tourner l'élément d'axe (A) dans un sens (R) ou l'élément de recouvrement (C) dans le sens de rotation opposé (GR);
- chausser le corps de base (B) dans la direction de l'axe (A5) sur l'élément d'axe (A);
- disposer la fixation (H) dans une découpe (D1) du ciel de toit (D);
- faire tourner l'élément d'axe (A) dans le sens de rotation (R); et
- faire tourner l'élément d'axe (A) dans le sens de rotation opposé (GR).

9. Procédé de montage d'un composant dans un véhicule, **caractérisé en ce qu'**il comporte les étapes suivantes:
- disposer le composant sur un élément d'axe (A) d'une fixation (H) selon l'une quelconque des revendications 1 à 7, et
- monter la fixation (H) conformément au procédé selon la revendication 8,
dans lequel l'ordre des étapes peut être permuté.

10. Composant, **caractérisé en ce qu'**il comprend une fixation selon l'une quelconque des revendications 1 à 7, au moyen de laquelle il est disposé dans un véhicule.
